# DEMANDE DE BREVET EUROPEEN

(11) **EP 0 718 152 A1**
(43) Date de publication de la demande: **26.06.1996**
(21) Numéro de dépôt: 94402949.5
(22) Date de dépôt: 20.12.1994
(51) Int. Cl.: B60Q 1/38, H04B 3/54

(54) **Communication de données au moyen du fil d'alimentation du clignotant d'un véhicule**

(71) Demandeur: Ortais, Paul, F-91370 Verrières-Le-Buisson (FR)
(72) Inventeur: Ortais, Paul, F-91370 Verrières-Le-Buisson (FR)

(57) **Abrégé**

Dispositif autorisant le transfert de données informatiques sur les réseaux alimentés de façon intermittente en courant continu.
L'invention concerne un dispositif modifiant les installations alimentées ou secourues par une tension continue, normalement par batterie, tels que des systèmes d'éclairage ou d'alarme, pour y permettre le transfert de données informatiques.
Il consiste en l'insertion en série d'éléments à seuil de conductance électrique (1) dans le circuit ordinaire comprenant une charge (2), une alimentation continue (3) et un commutateur (4).
Le dispositif selon l'invention est particulièrement destiné à l'installation de systèmes informatiques s'alimentant et communiquant au travers de réseaux de signalisation alimentés par batterie.

## Description

Dispositif permettant le transfert de données informatiques et de puissance sur les réseaux électriques alimentés de façon intermittente en courant continu, par insertion de dispositifs à seuil de conductance électrique.

L'invention concerne les installations alimentées ou secourues par une tension continue, normalement par batterie, tels que des systèmes d'éclairage ou d'alarme, et autorise le transfert de données informatiques et de puissance, par l'insertion de dispositifs simples n'altérant pas le comportement d'origine du réseau ainsi transformé.

L'informatique progresse en réduisant la taille et les coûts de ses dispositifs, ce qui permet d'envisager son application à des domaines de rusticité croissante. Le transfert des données collectées et l'acheminement des ordres deviennent alors un facteur bloquant, car le seul prix du recâblage, surtout sur des installations existantes, rejoint les coûts des dispositifs eux-mêmes. La présente invention utilise le câblage existant de façon simple, justifiant alors le coût de l'informatisation.

Pour illustrer les applications de la présente invention, considérons tout d'abord les véhicules routiers.

Concernant la saisie d'informations dans les remorques, citons les mesures de poids, en particulier la charge des essieux; les activations des freins, l'évolution des paramètres de freinage tels que la pression du circuit de frein, le contrôle d'usure, les pressions de suspension, la mesure en temps réel des pressions de pneus, les températures de freins et les informations propres à l'antibloquage ou l'antipatinage. Des mesures équivalentes sur les marchandises transportées sont concernées: identification des marchandises lors des manipulations de chargement et déchargement. Identification de la remorque elle-même. Contrôle de l'environnement de transport: températures, pression, humidité, chocs et vibrations. Maintien d'une communication permanente avec des systèmes ou des personnes voyageant à distance de la cabine de pilotage. Contrôle d'accés. Communication de l'historique de la remorque, que celle-ci conserve, au conducteur à fin de maintenance.

Concernant l'envoi d'ordres, outre les ordres et commandes liées aux mesures citées, il devient possible de connecter des charges non plus simplement passives, comme les lampes de signalisation ordinaires, mais incorporant une logique permettant de leur adresser des ordres individuels d'activation et d'extinction. Le procédé selon l'invention décrite permet également d'acheminer la puissance électrique pour l'exécution des ordres. Cette pratique permettrait de limiter ou réduire le nombre des câbles nécessaires. Cette utilisation concerne tous les véhicules roulant connus utilisant du courant continu, et pas seulement les attelages de remorque. Une autre application peut être la communication avec d'autres mobiles, les informations circulant alors jusqu'à un émetteur ou récepteur déporté dans l'ensemble roulant, relié selon l'invention à la cabine du conducteur.

Concernant d'autres dispositifs tels que ceux de signalisation de chantier, ou d'éclairage de secours, le dispositif selon l'invention décrite autorise la superposition d'informations, telles qu'alarmes, et présences, à l'alimentation des éclairages.

Les réseaux alimentés en courant continu travaillent généralement en tout-ou-rien, c'est-à-dire que les charges connectées ne connaissent que deux états:
- charges non alimentées, on mesure à leurs bornes une tension et un courant nuls;
- charges alimentées, le courant nominal traverse la charge, la tension appliquée est aux pertes de conduction dans les fils prés celle de l'alimentation, généralement une batterie.

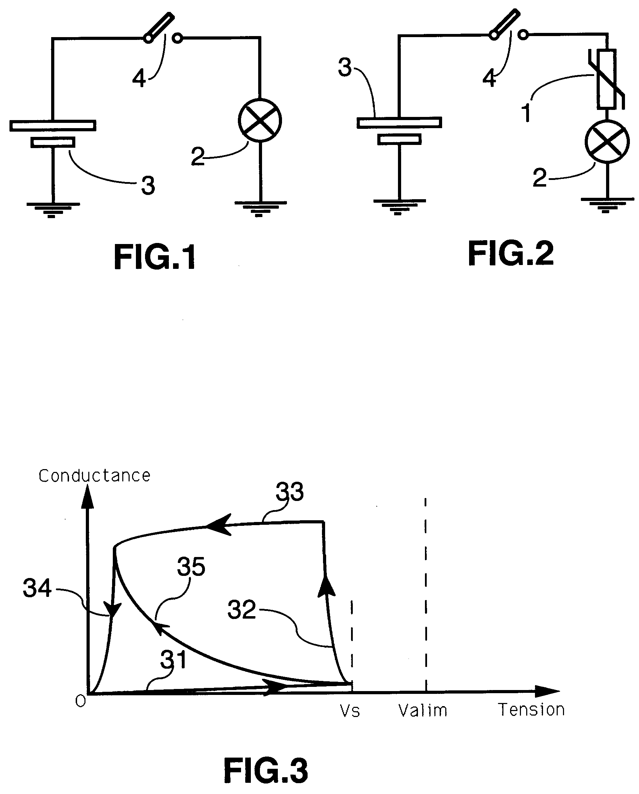

Selon la présente invention, un composant électrique (1) à seuil de conductance Vs est inséré en série avec la charge (2), l'alimentation (3) et le commutateur (4) de la charge. Le schéma électrique de la figure 1 illustre le montage traditionnel, et le schéma de la figure 2 illustre l'insertion de l'élément à seuil dans le circuit.

Le comportement de l'élément à seuil de conductance (1) est décrit par le diagramme de la figure 3:
- quand le système est mis initialement sous tension, aucune tension n'ayant été appliquée à ses bornes, l'élément voit également à ses bornes une tension nulle et n'est traversé par aucun courant. C'est le point origine (O) du diagramme.
- pour toute tension appliquée aux bornes inférieure à une valeur de seuil (Vs), sa conductance reste quasiment nulle. Des courants dits de fuite peuvent être observés suivant les technologies, mais restent négligeables. C'est le phénomène décrit par le trajet (31) du graphe.
- au dépassement de la tension de seuil (Vs), la conductance croît brutalement sur le trajet (32) du graphe; elle devient négligeable par rapport aux autres conductances du circuit, ce qui entraîne une brusque décroissance de la tension aux bornes de l'élément, un courant important le traversant alors. Le trajet (33) est emprunté. Ce changement d'état s'appelle avalanche quand un semiconducteur est utilisé.
- il est à noter que les étapes (32) et (33) s'enchaînent immédiatement dans la plupart des technologies appliquées aux éléments se déclenchant sur des seuils, la position intermédiaire étant instable. Cette instabilité assure la sécurité du dispositif, qui alimentera de façon fiable les charges aussitôt que la tension d'alimentation (Valim) est appliquée. L'avalanche réelle est figurée en (35).

Quand un réseau électrique est ainsi modifié, chacune des charges initialement reliée à l'alimentation l'est désormais au travers d'un tel élément à seuil de conductance.

Un système de transfert d'information fonctionne en utilisant sur ce réseau toute tension inférieure à la tension de seuil (Vs). L'impédance du réseau reste donc élevée et tout se passe comme si le réseau était, au repos, débarassé de ses charges d'origine.

Une application de la présente invention est détaillée ci-aprés à titre d'exemple: il s'agit de transmettre des informations au travers du réseau d'éclairage d'un véhicule routier à remorque.
L'exemple de la remorque illustre un avantage caractéristique de l'invention, en ce qu'elle épargne un câblage supplémentaire particulièrement sensible, le conducteur souple reliant tracteur et remorque. Un autre avantage caractéristique illustré par cet exemple est de transmettre également l'énergie de fonctionnement à un système informatique déporté dans la remorque.

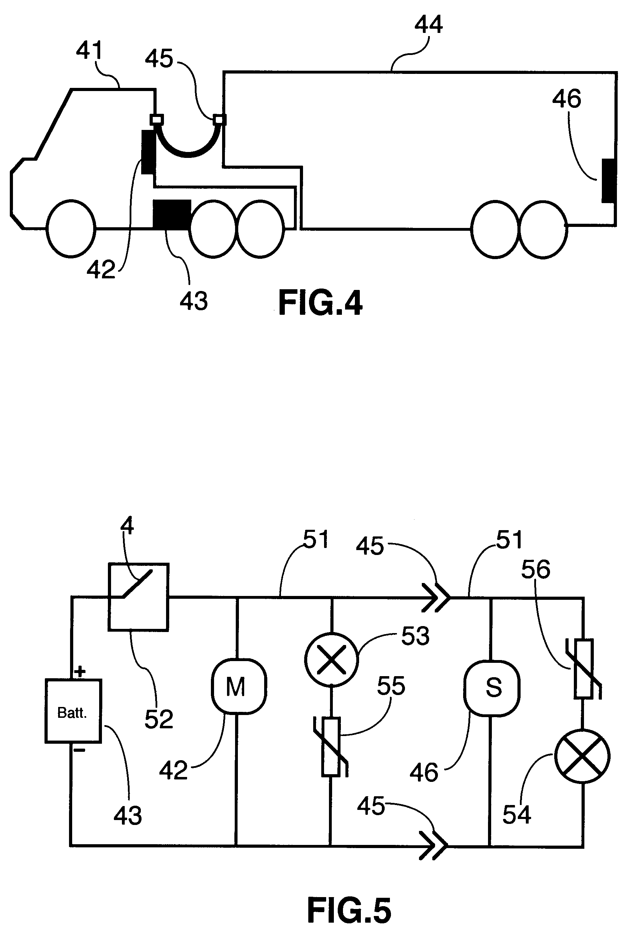

La figure 4 montre la configuration générale du véhicule: un tracteur (41) emporte un système maître (42) et une batterie (43) qui délivre une tension standard, ici 24 Volts. La liaison électrique à sa remorque (44) est assurée par un connecteur (45) qui relie, selon un branchement standard, les conducteurs suivants:
- fil de masse
- feu de changement de direction vers la droite
- feu de changement de direction vers la gauche
- feu stop côté droit
- feu stop côté gauche
- fil de réserve, souvent affecté à un éclairage intérieur
L'alimentation électrique (3) est constituée de la batterie (43) du tracteur, et le commutateur (4) par la centrale clignotante

Un système déporté (46) collecte les données propres à l'exploitation de la remorque (44) par divers appendices ou capteurs non representés ici, et se trouve situé sur celle-ci.

La figure 5 détaille le schéma électrique correspondant à celui des conducteurs d'éclairage choisi pour cette application. En l'occurence, l'alimentation du feu de changement de direction vers la droite.

Ce conducteur (51) traverse le connecteur de remorque (45) et alimente les feux (53,54) en série avec les éléments à seuil de conductance (55,56) respectivement. Remarquer que dans l'un des deux couples (53,55) c'est la charge qui est traversée la première. Le dipôle électrique est strictement équivalent. Dans la pratique, les charges sont souvent déjà reliées à la masse, et le montage (54,56) est le plus probable.

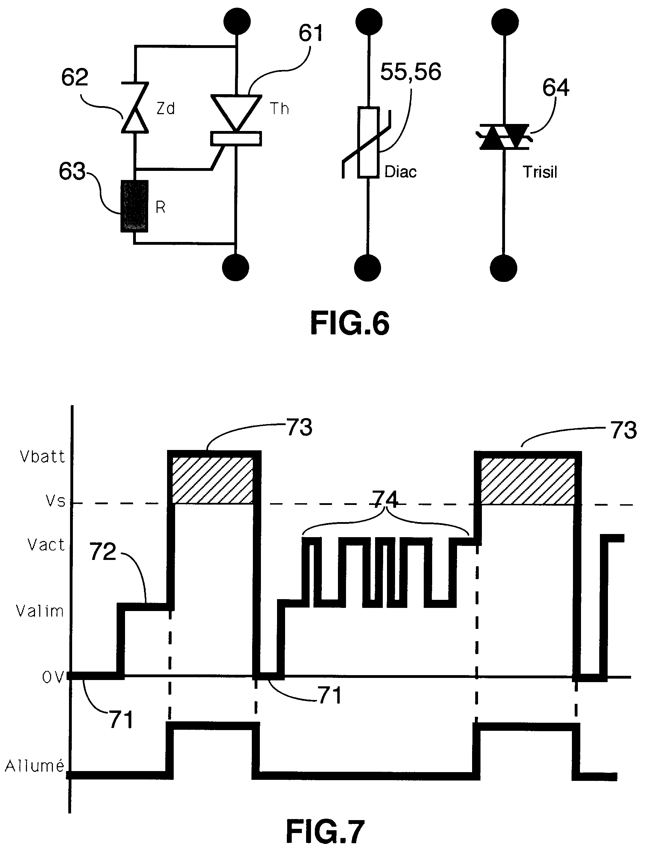

La figure 6 présente une réalisation des éléments à seuil de conductance (55,56):
Un thyristor Th (61) constitue le commutateur de courant. La diode Zener (62) assigne au montage une tension de seuil voisine de sa propre valeur de coude. La résistance (63) limite le courant de gâchette du thyristor (61). Le comportement décrit est celui du Diac, dont le symbole (55,56) est donné. Un autre symbole applicable au composant similaire nommé Trisil est montré en (64).

Dans notre exemple, le thyristor (61) ajoute à la tension de coude de la diode zener sa propre tension de gâchette. Sur un véhicule routier alimentant ses charges électriques sous 24 volts, on choisira par exemple une zener de 18 volts déclenchant un thyristor, ce qui produit une tension de seuil Vs d'une vingtaine de volts. Le thyristor (61) assure spontanément l'extinction de courant des éléments (55,56) par son courant de maintien.
Les technologies applicables à la réalisation d'un élément à seuil de conductance selon l'invention sont, à titre d'exemples non limitatifs, les suivantes.
- par commutation de semi-conducteurs, tous les commutateurs de puissance sont utilisables: thyristor, triac; transistors bipolaires, à effet de champ, GTO, c'est-à-dire à extinction par courant de gachette, combinés bipolaire et effet de champ, dipôles à avalanche de type TRISIL, et toute évolution de ces structures, normalement destinées à l'électrotechnique.
- par contact électromécanique, c'est-à-dire par relais solide où à liquide, comme le mercure.
- par conduction dans les gaz ou dans le vide, par exemple en utilisant des tubes à vide de puissance ou des thyratrons.
- par un circuit complexe utilisant pour évaluer les tensions présentes des moyens analogiques, tels que des amplificateurs opérationnels, des références de tension, des comparateurs; ou des moyens numériques, tels que des convertisseurs analogique/numériques et processeurs numériques; tous moyens pilotant finalement un commutateur de puissance. Ces réalisations permettant de mêler le dispositif à seuil de conductance et un dispositif capteur/actionneur déporté en une seule réalisation.

Sont concernés tous les moyens d'effectuer une commutation de courant électrique, et de commander ladite commutation pour obtenir l'effet de seuil selon l'invention décrite.

Le composant de puissance idéal au sens de la présente invention serait une version de puissance, jusqu'ici sans utilité pratique, du Diac ou du Trisil.

La figure 7 représente les états électriques du fil conducteur (51) tel qu'il est utilisé dans cette réalisation.
- en phase (71) au repos, le système maître détecte l'absence de tension sur le conducteur (51).
- Il injecte alors une tension d'alimentation (Va), inférieure à la tension de seuil (Vs). C'est la phase de fonctionnement (72) normale des systèmes informatiques embarqués. Ceux-ci sont alors alimentés sans qu'aucun courant ne traverse les feux de signalisation.
- si le conducteur du véhicule utilise le fil (51) pour signaler un changement de direction, la centrale clignotante injecte la tension de batterie (Vbatt) sur le fil (51). La tension de seuil (Vs) est dépassée; les éléments à seuil de conductance commutent, c'est la phase d'utilisation par le véhicule (73). Le courant de batterie est transmis directement aux charges.

Le système maître cesse alors d'alimenter le réseau, où la communication est devenue très difficile puisque le potentiel est fixé à la tension de batterie (Vbatt).
- à la fin de la phase (73), le système maître n'assurant pas le courant de maintien des éléments à seuil, ceux-ci se bloquent par manque de courant. Le système retrouve alors la phase (71) de non sollicitation. Puis la phase de fonctionnement (72) est rétablie aprés un temps supérieur au temps de blocage par manque de courant.
- alors la phase de communication (74) peut recommencer. La tension de signal actif (Vact) est présentée suivant une séquence à choisir parmi les nombreux protocoles de communication en série disponibles. La figure 7 illustre un usage des valeurs "marque" valant (Vact) et "repos" valant (Va).

La partie inférieure du graphe de la figure 7 montre au cours de cette séquence les moments où les feux s'allument effectivement.

Dans la réalisation présentée à titre d'exemple, il appartient au système déporté de générer la tension de signal actif (Vact) quand il transmet vers le système maître. L'énergie nécessaire est prélevée sur l'alimentation (Va) au moyen d'un convertisseur de courant continu.

Dans cette réalisation, le nombre de systèmes maître, déporté, de fils utilisés, ont été limités à un à fin de simplicité, mais ces éléments peuvent être nombreux. Une modulation par impulsion est choisie pour sa simplicité, mais sur le même support d'autres modulations sont envisageables, comme les modulations de fréquence, d'amplitude, de phase, ou leurs combinaisons.
- la figure 7 illustre une interruption de communication par un appel de clignotement par le conducteur du véhicule. Le système repasse alors inconditionnellement en phase (73). Il appartient au logiciel d'organiser les répétitions des messages interrompus.
Il peut arriver qu'un parasite déclenche accidentellement les éléments à seuil de conductance. Dans ce cas surviendrait un phénomène de verrouillage par le courant fourni par le système de communication, au cas où celui-ci serait capable de fournir plus que le courant de maintien des éléments à seuil. Il appartient alors au système de détecter ce cas pour passer en phase d'extinction (71) puis redémarrer.

Une réalisation du dispositif selon l'invention consiste en un module électronique tel que décrit en figure 6, que l'on vient insérer sur le conducteur (51) concerné.

Une autre réalisation consiste à intégrer ce dispositif dès la fabrication dans les charges terminales des réseaux concernés. A titre d'exemple pour des feux de signalisation, l'élément à seuil de conductance est inclus dans le culot de la lampe (53,54). L'équipement d'un véhicule se ramène alors simplement à changer des ampoules électriques.

## Revendications

1. Dispositif permettant le transfert de données informatiques sur les réseaux alimentés de façon intermittente en courant continu, caractérisé par l'insertion d'éléments à seuil de conductance électrique (1) dans le circuit ordinaire comprenant une charge (2), une alimentation continue (3) et un commutateur (4).

2. Dispositif selon la revendication 1 caractérisé en ce que le composant de puissance utilisé dans l'élément à seuil de conductance est un thyristor.

3. Dispositif selon la revendication 1 caractérisé en ce que le composant de puissance utilisé dans l'élément à seuil de conductance est un dipôle à avalanche de type Trisil.

4. Dispositif selon la revendication 1 caractérisé en ce que le composant de puissance utilisé dans l'élément à seuil de conductance est un triac.

5. Dispositif selon la revendication 1 caractérisé en ce que l'élément à seuil de conductance (1) est incorporé aux feux de signalisation, et s'installe comme une ampoule normale.

6. Dispositif selon la revendication 1 caractérisé en ce que la valeur du seuil de commutation (Vs) est ajustable.

7. Dispositif selon les revendications 1 et 4 caractérisé en ce que l'ajustement des valeurs de seuil des divers éléments est opéré par l'émission de commandes à cet effet sur le réseau électrique équipé.
